# EUROPEAN PATENT SPECIFICATION

(11) **EP 3 121 581 B1**
(45) Date of publication and mention of the grant of the patent: **04.07.2018**
(21) Application number: 15177872.7
(22) Date of filing: 22.07.2015
(51) Int. Cl.: G01M 11/00

(54) **A MEASUREMENT ARRANGEMENT TO DETERMINE A QUALITY OF AN OPTICAL CABLE AND AN OPTICAL CONNECTOR IN AN ASSEMBLED CONDITION**
MESSANORDNUNG ZUR BESTIMMUNG DER QUALITÄT EINES OPTISCHEN KABELS UND EINES OPTISCHEN VERBINDERS IN EINEM MONTIERTEN ZUSTAND
DISPOSITIF DE MESURE POUR DÉTERMINER UNE QUALITÉ D'UN CÂBLE OPTIQUE ET CONNECTEUR OPTIQUE DANS UN ÉTAT ASSEMBLÉ

(43) Date of publication of application: 25.01.2017
(73) Proprietor: CCS Technology Inc., Wilmington, DE 19803 (US)
(72) Inventor: Fiebig, Christian, 10365 Berlin (DE); Juarez Marroquin, Adrian, 12307 Berlin (DE)
(74) Representative: Epping - Hermann - Fischer

(56) References cited:
- US-A1- 2006 078 264

## Description

### Technical field

The invention is directed to a measurement arrangement to determine a quality of an optical cable and an optical connector terminating optical fibers of the optical cable in an assembled condition. The invention also relates to a method to determine the quality of an optical cable and an optical connector terminating optical fibers of the optical cable in an assembled condition.

### Background

Optical fiber transmission is becoming more and more common due to the growing bandwidth demand. To meet this demand, it is necessary to use an optical cable comprising a plurality of optical fibers in parallel for certain applications. As a consequence, the parallelization of optical fibers leads to N different connectors at the input and output side of the optical cable or the optical fibers.

To facilitate handling, an optical connector which groups several of these optical fibers to one single connector output has to be used. The optical connector can be configured as a physical contact connector, for example a MTP connector, or an expanded beam connector, such as a MXC connector. In order to evaluate the coupling of light transferred via parallel guided optical fibers and an optical connector for receiving optical waveguides, the optical cable comprising the optical fibers and the optical connector terminating the optical cable/optical fibers have to be analysed. Such an analysis device is known from US 2006/0078264. It is desired to provide a measurement arrangement to determine the quality of an optical cable and an optical connector in an assembled condition which allows to determine a state of the optical cable and the optical connector in an assembled condition and to specify the reason for a possible failure of the optical cable and the optical connector in the assembled condition. There is also a need to provide a method to determine a quality of an optical cable and an optical connector in an assembled condition which allows to determine a state of the optical cable and the optical connector in an assembled condition and to specify the reason for a possible failure of the optical cable and the optical connector in the assembled condition.

### Summary

The invention is defined by a measurement arrangement to determine a quality of an optical cable and an optical connector in an assembled condition in accordance with claim 1.

The measurement arrangement comprises a fixture to insert the optical connector, wherein the fixture comprises at least a first and a second hole to respectively receive a first and a second pin of the optical connector protruding from a front face of the optical connector and an opening to receive an area of the optical connector comprising end faces of the optical fibers. The measurement arrangement further comprises a camera device, a first light source to illuminate the front face of the fixture, a second light source to couple light in the optical cable, and a control device to control a measurement procedure of the measurement arrangement.

The control device is configured to control the camera device such that the camera device captures an image of the front face of the fixture. The control device is configured to evaluate the image of the front face of the fixture to determine whether the first and the second pin of the optical connector are inserted in the first and second pin hole of the fixture to assert whether the optical connector is inserted in the fixture.

The control device is configured to control the camera device such that the camera device captures a first image of light beams of the light coupled out of the end faces of the optical fibers in a first plane, for example the near field plane, and a second image of the light beams of the light coupled out of the end faces of the optical fibers in a second plane, for example the far field plane. The first plane is located closer to the front face of the fixture than the second plane. The control device is configured to evaluate the first image to determine the position of the end faces of the optical fibers.

The control device is configured to determine an angular misplacement for each of the optical fibers within the optical connector and/or an expansion of the respective light beam coupled out at the end face of the respective optical fiber by evaluating the first and second images. The control device is configured to determine an insertion loss value of the optical cable by evaluating a first intensity distribution of the light coupled out at the end faces of the optical fibers in the first image. The control device is configured to determine a mating loss value of the optical connector by evaluating the first intensity distribution of the light coupled out at the end faces of the optical fibers in the first image and by evaluating a second intensity distribution of the light coupled out at the end faces of the optical fibers in the second image. The invention is defined by a method to determine a quality of an optical cable and an optical connector in an assembled condition in accordance with claim 9. The method comprises the steps of:
- providing a fixture to insert the optical connector, wherein the fixture comprises at least a first and a second hole to respectively receive a first and a second pin of the optical connector protruding from a front face of the optical connector and an opening to receive an area of the optical connector comprising end faces of the optical fibers,
- inserting the optical connector into the fixture,
- illuminating the front face of the fixture,
- capturing an image of the front face of the fixture,
- evaluating the image of the front face of the fixture to determine whether the first and the second pin of the optical connector are inserted in the first and second pin hole of the fixture to assert whether the optical connector is inserted in the fixture,
- coupling light in the optical cable,
- capturing a first image of the light beams of the light coupled out of the end faces of the optical fibers in a first plane,
- evaluating the first image to determine the position of the end faces of the optical fibers,
- capturing a second image of the light beams of the light coupled out of the end faces of the optical fibers in a second plane, the first plane being located closer to the front face of the fixture than the second plane,
- determining an angular misplacement for each of the optical fibers within the optical connector and/or an expansion of the respective light beam coupled out at the end face of the respective optical fiber by evaluating the first and second images,
- determining an insertion loss value of the optical cable by evaluating a first intensity distribution of the light coupled out at the end faces of the optical fibers in the first image, and
- determining a mating loss value of the optical connector by evaluating the first intensity distribution of the light coupled out at the end faces of the optical fibers in the first image and by evaluating a second intensity distribution of the light coupled out at the end faces of the optical fibers in the second image.

The insertion loss value and the mating loss value may be determined as relative values, i.e. in relation to the insertion loss value and the mating loss value of an optical cable terminated with a reference connector.

The measurement arrangement enables a user to measure the quality of an optical connector which can be configured either as a physical contact connector, for example a MTP connector, or an expanded beam connector, such as a MXC connector being in an assembled condition with an optical cable comprising a plurality of optical fibers. The measurement arrangement can be used to determine if a connector, a physical contact connector or another expanded beam connector was assembled properly and if it meets a set of pass/fail criteria. The measurement arrangement allows a contactless measurement of the connector's metrology, the beam propagation direction of light beams of the optical fibers, the insertion and mating loss value of the optical cable and the optical connector being in an assembled condition.

Furthermore, the measurement arrangement and the method to determine the quality of an optical cable and an optical connector in the assembled state allows to quantify a miss-positioning of the optical fibers at the optical connector. The information obtained can be used to determine the assembly quality of the optical connector and the physical quality of the optical cable to conclude whether the assembly of the optical connector and the optical cable passes a set of predefined criteria.

### Brief description of the drawings

Figure 1 shows an embodiment of a measurement arrangement to determine a quality of an optical cable and an optical connector in an assembled condition.
Figure 2 illustrates steps of a method to determine a quality of an optical cable and an optical connector in an assembled condition.
Figure 3 shows a measurement arrangement of a camera device and a fixture to determine a quality of an optical cable and an optical connector in a misaligned state.
Figure 4A shows a fixture receiving an optical connector having an angular misalignment.
Figure 4B shows a fixture receiving an optical connector having a radial misalignment.
Figure 5 shows a measurement arrangement of a camera device and a fixture to determine a quality of an optical cable and an optical connector in a calibrated state.
Figure 6 shows a front face of an optical connector and optical fibers being inserted in the optical connector and a reference coordinate system to whom all metrology values are related to.
Figure 7 shows the capturing of images in a first plane and a second plane.
Figure 8A shows a captured first image of light beams coupled out of optical fibers of an optical cable being inserted in an optical connector in a first plane.
Figure 8B shows a captured second image of light beams coupled out of optical fibers of an optical cable being inserted in an optical connector in a second plane.
Figure 9A shows the capturing of an image of a front face of a fixture with an inserted optical cable in a first plane.
Figure 9B shows the capturing of an image of a front face of a fixture with an inserted optical cable in a second plane.

### Detailed description

The present invention will now be described in more detail hereinafter with reference to the accompanying drawings showing different embodiments of the invention. The invention may, however, be embodied in many different forms and should not be construed as limited to the embodiments set forth herein; rather, these embodiments are provided so that the disclosure will fully convey the scope of the invention to those skilled in the art. The drawings are not necessarily drawn to scale but are configured to clearly illustrate the invention.

The basic principal of the method to determine a quality of an optical cable and an optical connector being in an assembled condition can be divided into two parts. The first part uses a single image or a set of images to locate a reference feature on the optical connector to set a reference coordinate system. For this purpose, the optical connector is illuminated from the front and a reference feature is used to verify the presence of the optical connector within a fixture and to establish the reference coordinate system. According to a possible embodiment, the pins of the optical connector can be used as a reference feature of the optical connector. In addition, the geometrical features of the optical connector are measured and the measured values are compared to nominal values using the images of the front face of the fixture with the inserted optical connector obtained from a camera system.

Once the reference coordinate system is set, a light source illuminating the optical connector from the front is turned off and another light source, such as an LED light source, which is connected to the input side of the optical fibers, is used to evaluate the position of the optical fibers within the optical connector. This is done by capturing a first image in a first plane, for example a near field plane, and measuring a first intensity distribution of the light emitted at the output side of the optical fibers in the first image. A center of mass of the light beams from the several optical fibers of the optical cable is evaluated in the first image to assign to each optical fiber end a coordinate in space. The intensity value of each optical fiber is integrated in the first plane and the insertion loss value of the optical cable/the optical fibers is estimated.

To estimate a beam direction of the light emitted from the output side of the several optical fibers, a second image of each light beam of the optical fibers is captured in a second plane, for example a far field plane, and the center of mass of each light beam is evaluated. By comparing the coordinate value in the first and second plane for each optical fiber, the respective direction of the light beams can be calculated. An angular misplacement of a respective optical fiber inside the optical connector can then be deducted from the comparison of the coordinate value of the center of mass of the light beams evaluated in the first and second plane. Furthermore, a mating loss value can be determined by evaluating the first intensity distribution of the light coupled out at the end faces of the optical fibers in the first image and by evaluating a second intensity distribution of the light coupled out at the end faces of the optical fibers in the second image. The mating loss value may be determined by integrating the intensity values of the intensity distribution of the light emitted from the optical fibers in the first plane and in the second plane and by estimating an overlap integral against a pre-defined aperture.

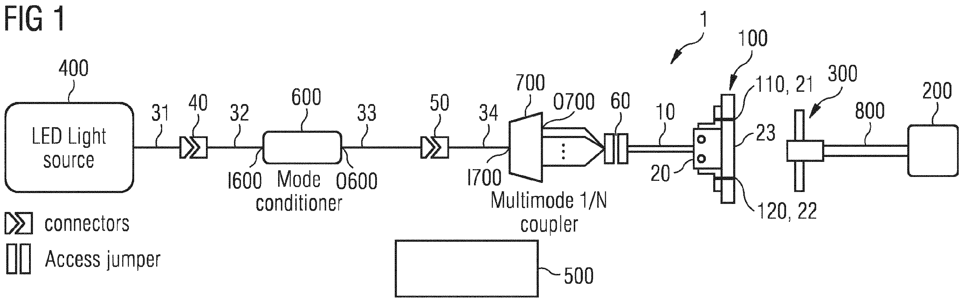

An embodiment of a measurement arrangement 1 to determine a quality of an optical cable and an optical connector in an assembled condition is shown in Figure 1. The measurement arrangement 1 comprises a fixture 100 to insert an optical connector 20 terminating optical fibers of an optical cable 10. The fixture 100 comprises at least a first and a second hole 110, 120 to respectively receive a first pin 21 and a second pin 22 of the optical connector 20. The first and second pin 21, 22 protrude from a front face 23 of the optical connector 20 and an opening to receive an area of the optical connector 20 comprising end faces of the optical fibers.

The measurement arrangement 1 further comprises a camera device 200 to capture an image of the front face 23 of the optical connector 20. A first light source 300 of the measurement arrangement 1 is used to illuminate the front face 23 of the optical connector 20. The measurement arrangement 1 comprises a second light source 400 to couple light in the optical cable 10, in particular in optical fibers or waveguides of the optical cable. The measurement procedure to determine the quality of the optical cable 10 and the optical connector 20 is controlled by a control device 500, for example a computer, of the measurement arrangement.

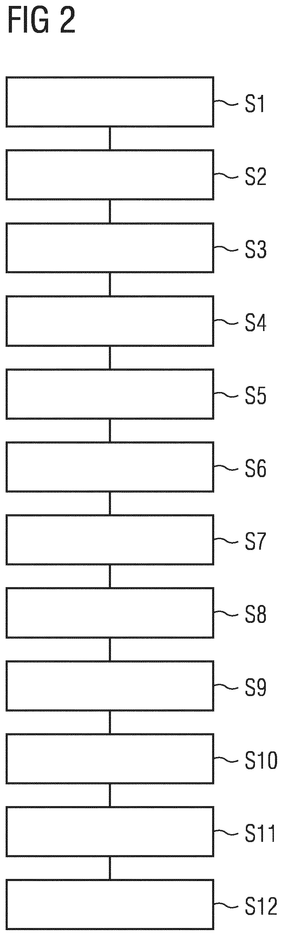

Figure 2 shows an embodiment of a method to determine a quality of the optical cable 10 and the optical connector 20 terminating optical fibers of the optical cable in an assembled condition. The method comprises several steps S1 to S12 which are explained in the following with reference to the accompanying Figures 1 to 9B.

According to step 1 of the method, the fixture 100 shown in Figure 1 to hold the optical connector 20 to be analysed is provided. Furthermore, an image capturing system is provided. The image capturing system may comprise the camera device 200 shown in Figure 1 and magnifying optics 800. According to a possible embodiment, the magnifying optics may comprise a telecentric lens to compensate for aberrations so that additional calibration procedures to compensate these effects via software are not necessary. The light source 300 to illuminate the front face 23 of the optical connector 20 may be mounted on the magnifying optics 800 to illuminate the fixture 100 and the optical connector 20 homogenously, making pattern recognition easier.

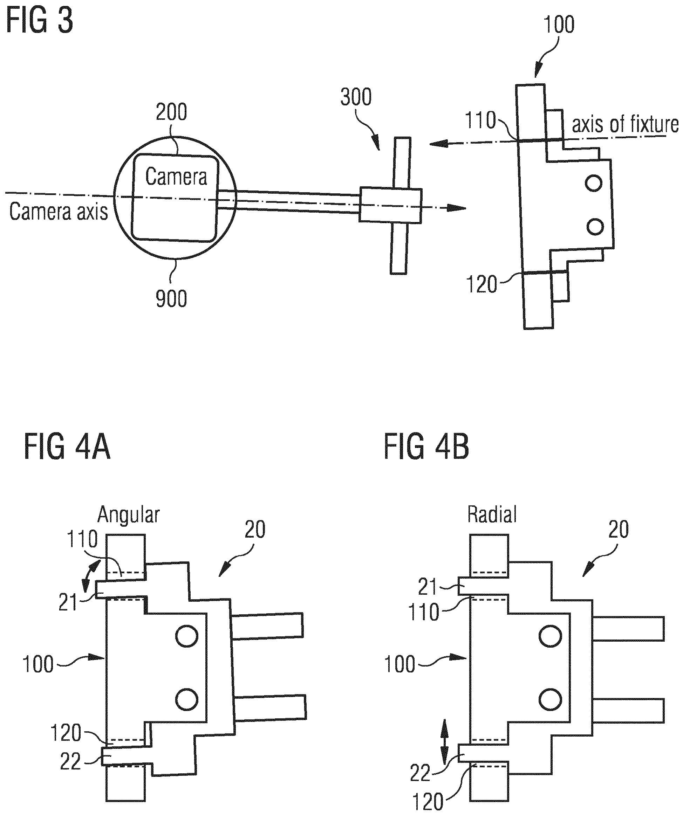

Figure 3 shows a portion of the measurement arrangement of Figure 1 comprising the image capturing system with the camera device 200 and the magnifying optics 800, and the light source 300 attached on the magnifying optics 800. The fixture 100 is placed in front of the image capturing system. Before capturing an image of the front face of the fixture 100, the measurement arrangement has to be adequately calibrated. Figure 3 shows the measurement arrangement before the calibration. The optical axis of the camera device 200 is not oriented parallel to the optical axis of the fixture 100.

In order to align the image capturing system and the fixture 100, the image capturing system/the camera device 200 and/or the fixture 100 has to be moved so that the optical axis of the image capturing system/the camera device 200 is oriented parallel to the optical axis of the fixture 100. For this purpose, the camera device 200 may be mounted on a rotational stage 900 which may be moved in relation to the fixture. It is also possible that the fixture 100 or both of the image capturing system and the fixture 100 is moved to align the optical axis.

According to a subsequent step S2, the optical connector 20 is inserted into the fixture 100. Figures 4A and 4B show the optical connector 20 being inserted in the fixture 100. The fixture 100 needs to be designed tightly around the pins 21, 22 of the optical connector 20 to avoid angular shift of the optical connector in the fixture as shown in Figure 4A or lateral/radial shift as shown in Figure 4B. The fixture used in Figures 4A and 4B has loose tolerances giving room for radial and angular misalignment. An appropriate embodiment of a fixture 100 provides a radial and angular alignment of the optical connector 20 in the fixture 100.

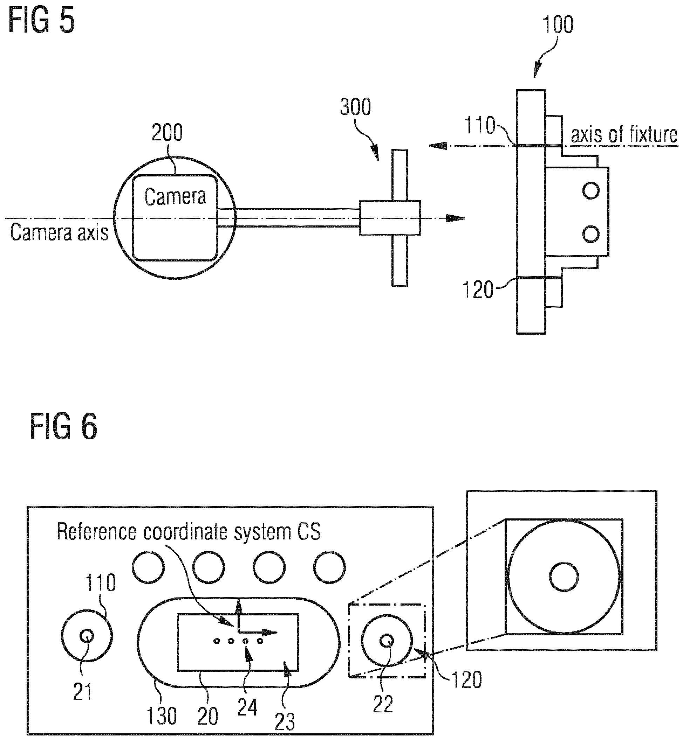

Figure 5 shows a portion of the measurement arrangement comprising the image capturing system and the fixture 100. The image capturing system comprises the camera device 200, the magnifying optics 800 and the light source 300 mounted to the magnifying optics 800. The fixture 100 is positioned in front of the light source 300. In the calibrated state of the measurement arrangement, the fixture 100 and the image capturing system are aligned such that the optical axis of the camera device 200 is oriented parallel to the optical axis of the fixture 100.

According to a subsequent step S3 the front face of the fixture 100 is illuminated by the light source 300. The light source 300 may be configured as a lamp. According to step S4, the image I0 of the front face of the fixture 100 is captured by the camera device 200. To this purpose, the control device 500, shown in Figure 1, is configured to control the camera device 200 such that the camera device 200 captures an image IO of the front face of the fixture 100.

Figure 6 show the image of the front face of the fixture 100. The optical connector 20 is inserted in the fixture 100 such that the pins 21 and 22 of the optical connector 20 protruding from the front face 23 of the optical connector 20 are arranged within the holes 120 of the fixture 100. An area 24 of the optical connector 20 comprising end faces of the optical fibers 11, 12, 13, 14 is received in an opening 130 of the fixture 100.

According to an embodiment of the measurement arrangement 1, the control device 500 is configured to evaluate the image I0 of the front face of the fixture 100 shown in Figure 6 to determine whether the pins 21 and 22 of the optical connector 20 are inserted in the pin holes 110 and 120 of the fixture 100 and to assert whether the optical connector 20 is inserted in the fixture 100. According to a step S5 of the method to determine the quality of the optical cable and the optical connector in the assembled condition, the image I0 of the front face of the fixture 100 is evaluated to determine whether the pins 21 and 22 of the optical connector 20 are inserted in the pin holes 110 and 120 of the fixture 100 to assert whether the optical connector 20 is inserted in the fixture 100. Both connector pins 21 and 22 may be recognized accurately by applying image filtering and pattern recognition techniques.

According to a possible embodiment of the measurement arrangement, the control device 500 is configured to determine the position of the pins 21 and 22 of the optical connector 20 by evaluating the image I0 of the front face of the fixture 100. Accordingly, the position of the pins 21 and 22 of the optical connector 20 may be determined in method step S5 by evaluating the image I0 of the front face of the fixture 100. Thus, the correct position of the optical fibers 11, 12, 13 and 14 within the optical connector 10 can be verified.

According to a possible embodiment of the measurement arrangement, the control device 500 is configured to determine an origin of a reference coordinate system CS shown in Figure 6 in relation to the position of the pins 21 and 22 of the optical connector 20. According to step S5 of the method to determine the quality of the optical cable 10 and the optical connector 20 in the assembled condition, an origin of the reference coordinate system CS is determined in relation to the position of the pins 21 and 22 of the optical connector 20.

As soon as the presence of the optical connector 20 within the fixture 100 is verified in the step S5 a reference feature of the optical connector is acquired. According to a possible embodiment, the pins 21 and 22 of the optical connector were used as a reference feature to define the coordinate system CS. The origin of the coordinate CS may be set in the center between the positions determined for the detected pins 21 and 22 of the optical connector. Two other arbitrary marks of the optical connector can also be used as reference features to define the origin of coordinate system CS. In dependence on the material of the pins 21 and 22 and the material of the fixture, the acquisition of the pins 21 and 22 can become complicated. An appropriate image filtering technique may be chosen in dependence on the material of the pins 21, 22 and the material of the fixture 100, since light is reflected and acknowledged differently by the camera device 200.

According to a subsequent step S7 of the method to determine the quality of the optical cable 10 and the optical connector 20 in the assembled condition, light may be coupled in the optical cable 10 by means of the light source 400. The light source 400 may be configured as an LED light source or a laser source. As illustrated in the embodiment of the measurement arrangement 1 of Figure 1, the light emitted by the light source 400 may be coupled into a waveguide 31 which is terminated by an optical connector 40. The light of the light source 400 may be coupled via the optical connector 40 and a subsequent waveguide 32 to a mode conditioner 600. The mode conditioner 600 has an input side 1600 to couple light into the mode conditioner and an output side O600 to couple light out of the mode conditioner 600. The mode conditioner 600 is configured to IEC 61280-4-1 and TIA-568-14-B EF requirements.

The output side O600 is coupled to a waveguide 33 which is connected to a subsequent waveguide 34 by an optical connector 50. The optical arrangement further comprises a multimode coupler 700 having an input side 1700 to couple light into the multimode coupler and an output side O700 to couple light out of the multimode coupler and into the optical fibers 11, 12, 13 and 14 of the optical cable 10.

The light source 400 is arranged to couple light via the optical waveguides 31 and 32 to the input side 1600 of the mode conditioner 600. The output side O600 of the mode conditioner 600 is coupled via the waveguides 33 and 34 to the input side 1700 of the multimode coupler 700 which conditions the output field pattern. This is important to ensure the correct operation of the 1 to N multimode fiber coupler 700 and can be omitted, if an optical connector holding many single mode fibers is used. The light coupled out at the output side O700 of the multimode coupler accesses the optical cable 10 and the optical connector 20 under test by connecting an access jumper 60 between the N outputs of the multimode coupler 700 and the optical cable 10 under test.

According to an embodiment of the measurement arrangement 1, the control device 500 is configured to control the camera device 200 such that the camera device 200 captures a first image I1 of light beams L11, L12, L13, L14 of the light coupled out of the end faces of the optical fibers 11, 12, 13, 14 in a first plane NP, for example a near field plane. The control device 500 may be further configured to control the camera device 200 such that the camera device 200 captures a second image I2 of the light beams L11, L12, L13, L14 of light coupled out of the end faces of the optical fibers 11, 12, 13, 14 in a second plane FP, for example a far field plane.

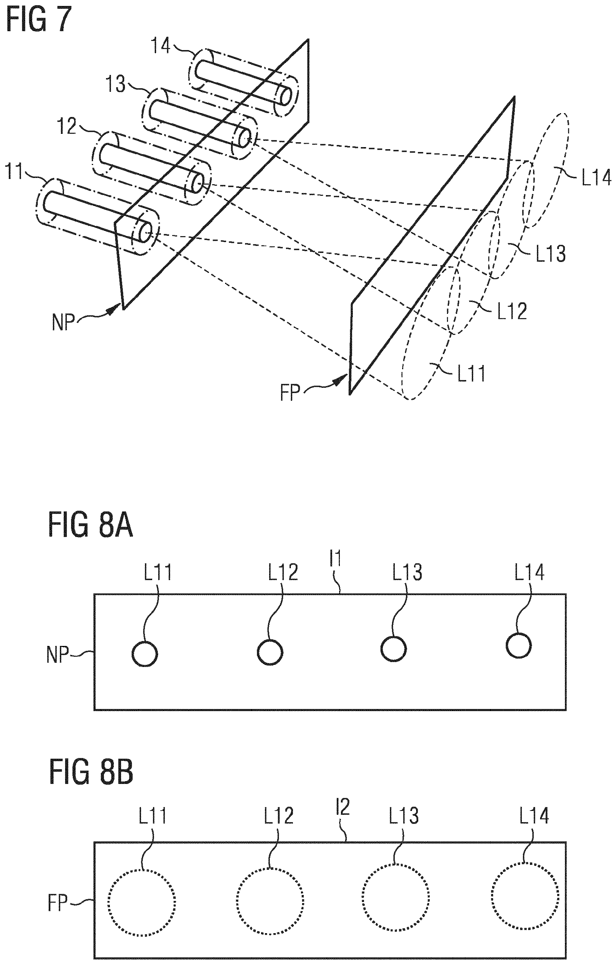

Figure 7 shows the end faces of the optical fibers 11, 12, 13, 14 from which the light beams L11, L12, L13 and L14 of the optical fibers 11, 12, 13 and 14 are emitted. Figure 7 further shows the first plane NP and the second plane FP. The first plane NP is located closer to the end faces of the optical fibers 11, 12, 13 and 14 than the second plane FP. Consequently, the light beams L11, L12, L13 and L14 emitted from the optical fibers 11, 12, 13 and 14 expand from the first plane NP in the direction towards the second plane FP.

Figure 8A shows the captured first image I1 of the light beams L11, L12, L13, L14 of the light coupled out of the end faces of the optical fibers 11, 12, 13 and 14 in the first plane NP. Figure 8B shows the captured second image I2 of the light beams L11, L12, L13 and L14 of the light coupled out of the end faces of the optical fibers 11, 12, 13 and 14 in the second plane FP. The comparison of Figures 8A and 8B shows that the perimeter of the light beams L11, L12, L13 and L14 is expanded in the second plane FP in relation to the perimeter of the light beams L11, L12, L13 and L14 in the first plane NP.

According to a method step S8 of the method to determine the quality of the optical cable 10 and the optical connector 20 in the assembled condition, the first image I1 of the light beams L11, L12, L13 and L14 of the light coupled out of the end faces of the optical fibers 11, 12, 13 and 14 is captured in the first plane NP. According to a subsequent method step S8, the captured first image I1 is evaluated by the control device 500 to determine the position of the end faces of the optical fibers 11, 12, 13 and 14. Thus, the correct position of the optical fibers within the optical connector 20 can be verified.

According to a possible embodiment of step S8 of the method, the position of the end faces of the optical fibers 11, 12, 13, and 14 is determined in relation to the origin of the reference coordinate system CS by means of the control device 500 to evaluate the position of the optical fibers 11, 12, 13 and 14 within the optical connector 20 by evaluating the first image I1 in the first plane NP. The position of the end faces of the optical fibers 11, 12, 13 and 14 may be determined by measuring the respective spot size of the light beams in the image I1 and determining the respective center mass of the spots for each optical fiber 11, 12, 13 and 14. The center mass values may then be used to establish the position of the respective optical fibers within the optical connector 20 to make sure that the optical connector 20 is assembled properly.

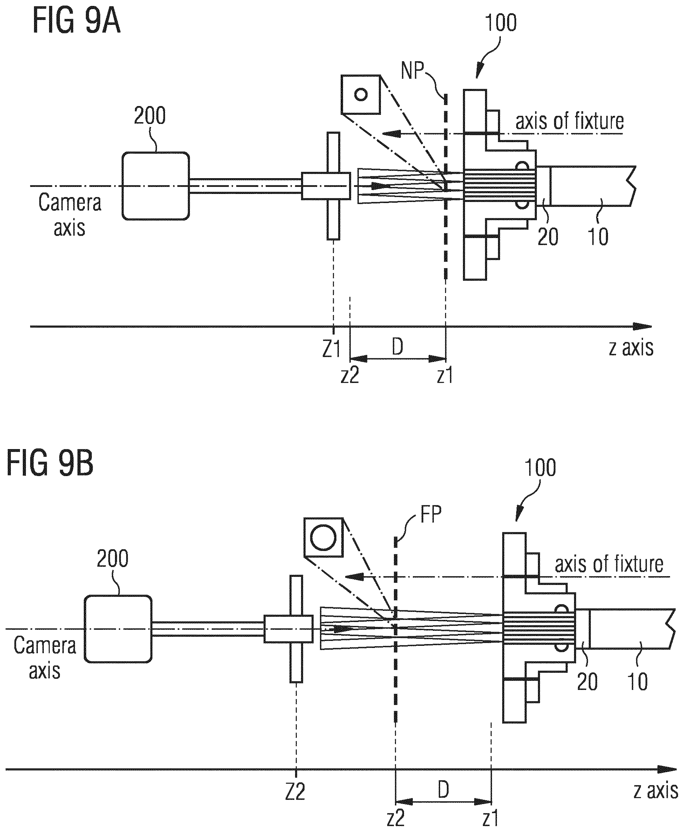

Figure 9A shows a portion of the measurement arrangement 1 to determine the quality of the optical cable 10 and the optical connector 20 in the assembled condition. The measurement arrangement comprises the image capturing system with the camera device 200 and the magnifying optics 800. The fixture 100 with the inserted optical connector 20 is positioned in front of the image capturing system. According to a possible embodiment of step S7 of the method to determine the quality of the optical cable 10 and the optical connector 20, the first image I1 is captured in the first plane NP at a first location z1 between the fixture 100 and the camera device 200 by setting a focus of the camera device 200 to the first plane NP, when the camera device 200 is placed at the first position Z1.

According to a subsequent step S9 of the method to determine the quality of the optical cable 10 and the optical connector 20 in the assembled condition, the second image I2 of the light beams L11, L12, L13 and L14 of the light coupled out of the end faces of the optical fibers 11, 12, 13 and 14 is captured in the second plane FP by means of the camera device 200 controlled by the control device 500. Figure 9B shows a portion of the measurement arrangement 1 comprising the image capturing system with the camera device 200 and the magnifying optics 800. The fixture 100 with the optical connector 20 inserted in the fixture 100 is placed in front of image capturing system.

The second image I2 is captured in the second plane FP at a second location z2 between the fixture 100 and the camera device 200. The second location z2 is farther away from the front face of the fixture 100 than the first location z1. In order to capture the second image 12, the camera device 200 is moved from the first position Z1 to a second position Z2 being farther away from the front face of the fixture 100 than the first position Z1. The focus of the camera device 200 is kept unchanged in comparison to the set focus for capturing the first image I1. The moving of the camera device 200 between the first position Z1 and the second output Z2 is controlled by the control device 500.

According to a step S10 of the method to determine the quality of the optical cable 10 and the optical connector 20 in the assembled condition, an angular misplacement of each of the optical fibers 11, 12, 13 and 14 within the optical connector 20 and/or an expansion of the respective light beam L11, L12, L13 and L14 coupled out of the end face of the respective optical fiber 11, 12, 13 and 14 is determined by evaluating the first and second images I1 and 12.

According to a possible embodiment to determine the angular misplacement of each of the optical fibers 11, 12, 13 and 14 within the optical connector 10, the first image I1 is evaluated to determine a respective center of mass of the light beams L11, L12, L13 and L14 of the light coupled out at the respective end face of the optical fibers 11, 12, 13 and 14 in the first plane NP. The second image I2 is evaluated to determine a respective center of mass of the light beams L11, L12, L13 and L14 of the light coupled out at the respective end face of the optical fibers 11, 12, 13 and 14 in the second plane FP.

The angular misplacement is determined for each of the optical fibers 11, 12, 13 and 14 within the optical connector 10 by comparing the respective center of mass of the light beams L11, L12, L13 and L14 of the light coupled out of the respective optical fiber 11, 12, 13 and 14 in the first plane NP with the respective center of mass of the light beams L11, L12, L13 and L14 of the light coupled out of the respective optical fiber 11, 12, 13 and 14 in the second plane FP.

Once the respective centers of mass of the light beams of the optical fibers in the first plane NP and the second plane FP are measured, the angle of propagation of the light emitted from each of the optical fibers can be estimated using simple maths. This value can then be used to determine the position of the optical fibers in the optical connector, as well as to define a fail/pass criterion. If the value is to be used as fail/pass criteria, it has to be correlated to a pre-calculated/pre-measured mating loss value.

According to a further embodiment of the method to determine the quality of the optical cable 10 and the optical connector 20 in the assembled condition, a respective perimeter of the light beams L11, L12, L13 and L14 is determined in the first image I1 and the second image 12. The expansion of the light beams L11, L12, L13 and L14 is determined in dependence on the determined respective perimeters of the light beams L11, L12, L13 and L14 in the first and second image I1, I2 and a distance D between the first and second locations z1 and z2 of the first plane NP and the second plane FP.

In order to determine the beam propagation direction of the respective light beams L11, L12, L13 and L14, the light source 400 may be configured as an LED source emitting light, for example, at λ = 850 nm directly into the optical fibers 11, 12, 13 and 14. The choice of a wavelength of λ = 850 nm rather than a predefined wavelength for which the optical fibers have been conceived, for example a wavelength of λ = 1300 nm, may be used since CCD cameras usually have a better resolution for this wavelength. This choice should not affect the measurement system though. An LED light source is used to reduce the effect of multimode interference in multimode fibers and hence reduce the speckle pattern. In a single mode fiber connector system, a laser source can alternatively be used, since no speckle pattern is present.

According to a subsequent step S11 of the method, an insertion loss value of the optical cable 10 is determined by determining a first intensity distribution over the light coupled out at the end faces of the optical fibers 11, 12, 13 and 14 in the first image I1. The insertion loss value of the optical cable may be determined by integrating the respective intensity values of the first intensity distribution. That means that according to the present invention, the intensity distribution of the light coupled out of the optical fibers is measured with the camera device 200 and the individual intensity values are then integrated, rather than taking a pattern matching approach. The intensity distribution of each of the optical fibers may be integrated in the first plane.

The integrated intensity distribution is then compared to the integrated intensity distribution of a "golden" connector and the relative loss value of the optical connector is computed. To compute the relative loss value, the integrated intensity value needs to be measured at the same camera gain value or recomputed to compensate for the different camera gain value. To re-compute the integrated intensity value, a gain intensity curve can be measured and the curve fitted using, for example, an exponential fit. The curve fitting values are used to re-evaluate the integrated intensity value and to estimate the relative loss value. The absolute insertion loss value is then obtained by measuring the insertion loss value of the "golden" connector and adding the relative loss value of the connector of interest. The insertion loss values of the "golden" connector is evaluated by measuring the intensity distribution at locations z1 and z2 as shown in Figures 9A and 9B, integrating its values and evaluating the loss value.

According to a subsequent step S12 of the method to determine the quality of the optical cable 10 and the optical connector 20 in the assembled condition, a mating loss of the optical connector 20 is determined by evaluating the first intensity distribution of the light coupled out at the end faces of the optical fibers 11, 12, 13, 14 in the first image and by evaluating a second intensity distribution of the light coupled out at the end faces of the optical fibers 11, 12, 13, 14 in the second image 12. The mating loss of the optical connector 20 may be determined by respectively integrating the respective intensity values of the first and the second intensity distribution over a predefined region emulating a mating connector of the optical connector 20. The predefined region may be defined using the reference coordinate system CS.

With reference to Figure 1, the measured insertion loss is defined as the loss that occurs between the optical connector 60 and the optical connector 20 terminating the optical cable 10. The measured mating loss occurs between the optical connector 20 and a virtual connector optically coupled to the optical connector 20. The mating loss may be calculated by an overlap integral with the virtual connector by using the values of the intensity distributions of the light coupled out of the optical fibers in the near and far field plane.

The measurement arrangement 1 is configured to determine the metrology of the optical connector 20. In particular, the measurement arrangement 1 allows to recognize the presence of an optical connector 20 inside the fixture 100 and to verify the correct assembly of the optical connector 20. The measurement arrangement further allows to determine the position of the optical fibers 11, 12, 13, 14 in the optical connector 20 and the beam propagation direction. The measurement arrangement 1 allows a contactless insertion loss measurement and a mating loss estimation.

The measurement arrangement and the method to determine the quality of the optical cable 10 and the optical connector 20 allow an optical connector to be assessed against a set of measurement criteria independent of a second connector it is mated to. The method is flexible in that it can be used with physical contact or expanded beam connectors. In the case of physical contact connectors, the measurement arrangement allows a non-contact method of measuring performance. It enables rapid measurement of multi-channel optical connectors.

### List of reference signs

1 measurement arrangement
10 optical cable
11,..., 14 optical fibers
20 optical connector
21, 22 pins of optical connector
31, ..., 34 optical waveguides
40,50 connector
60 access jumper
100 fixture
200 camera device
300 first light source
400 second light source
500 control device
600 mode conditioner
700 multimode coupler
800 magnifying optics
900 rotational stage

## Claims

1. A measurement arrangement to determine a quality of an optical cable and an optical connector in an assembled condition, comprising:
- a fixture (100) configured to insert the optical connector (20), wherein the fixture (100) comprises at least a first and a second hole (110, 120) to respectively receive a first and a second pin (21, 22) of the optical connector (20) protruding from a front face (23) of the optical connector and an opening (130) to receive an area (24) of the optical connector (20) comprising end faces of the optical fibers (11, 12, 13, 14),
- a camera device (200),
- a first light source (300) configured to illuminate the front face of the fixture (100),
- a second light source (400) configured to couple light in the optical cable (10),
- a control device (500) configured to control a measurement procedure of the measurement arrangement (1),
- wherein the control device (500) is configured to control the camera device (200) such that the camera device (200) captures an image (I0) of the front face of the fixture (100),
- wherein the control device (500) is configured to evaluate the image (I0) of the front face of the fixture (100) to determine whether the first and the second pin (21, 22) of the optical connector (20) are inserted in the first and second pin hole (110, 120) of the fixture (100) to assert whether the optical connector (20) is inserted in the fixture (100),
- wherein the control device (500) is configured to control the camera device (200) such that the camera device (200) captures a first image (I1) of light beams (L11, L12, L13, L14) of the light coupled out of the end faces of the optical fibers (11, 12, 13, 14) in a first plane (NP) and a second image (I2) of the light beams (L11, L12, L13, L14) of the light coupled out of the end faces of the optical fibers (11, 12, 13, 14) in a second plane (FP), the first plane (NP) being located closer to the front face of the fixture (100) than the second plane (FP),
- wherein the control device (500) is configured to evaluate the first image (I1) to determine the position of the end faces of the optical fibers (11, 12, 13, 14),
- wherein the control device (500) is configured to determine an angular misplacement for each of the optical fibers (11, 12, 13, 14) within the optical connector (20) and/or an expansion of the respective light beam (L11, L12, L13, L14) coupled out at the end face of the respective optical fiber (11, 12, 13, 14) by evaluating the first and second images (I1, 12),
- wherein the control device (500) is configured to determine an insertion loss value of the optical cable (10) by evaluating a first intensity distribution of the light coupled out at the end faces of the optical fibers (11, 12, 13, 14) in the first image (I1),
- wherein the control device (500) is configured to determine a mating loss value of the optical connector (20) by evaluating the first intensity distribution of the light coupled out at the end faces of the optical fibers (11, 12, 13, 14) in the first image (I1) and evaluating a second intensity distribution of the light coupled out at the end faces of the optical fibers (11, 12, 13, 14) in the second image (12).

2. The measurement arrangement as claimed in claim 1,
wherein the control device (500) is configured to determine the position of the first and second pin (21, 22) of the optical connector (20) by evaluating the image (I0) of the front face of the fixture (100).

3. The measurement arrangement as claimed in claims 1 or 2,
- wherein the control device (500) is configured to determine an origin of a reference coordinate system (CS) in relation to the position of the first and second pin (21, 22) of the optical connector (20),
- wherein the control device (500) is configured to determine the position of the end faces of the optical fibers (11, 12, 13, 14) in relation to the origin of the reference coordinate system (CS) to evaluate the position of the optical fibers (11, 12, 13, 14) within the optical connector (20) by evaluating the first image (I1) in the first plane (NP).

4. The measurement arrangement as claimed in any of the claims 1 to 3,
- wherein the control device (500) is configured to evaluate the first image (I1) to determine a respective center of mass of the respective light beam (L11, L12, L13, L14) of the light coupled out at the respective end face of the respective optical fiber (11, 12, 13, 14) in the first plane (NP),
- wherein the control device (500) is configured to evaluate the second image (I2) to determine a respective center of mass of the respective light beam (L11, L12, L13, L14) of the light coupled out at the respective end face of the respective optical fiber (11, 12, 13, 14) in the second plane (FP),
- wherein the control device (500) is configured to determine the angular misplacement for each of the optical fibers (11, 12, 13, 14) within the optical connector (10) by comparing the respective center of mass of the respective light beam (L11, L12, L13, L14) of the light coupled out of the respective optical fiber (11, 12, 13, 14) in the first plane (NP) with the respective center of mass of the respective light beam (L11, L12, L13, L14) of the light coupled out of the respective optical fiber (11, 12, 13, 14) in the second plane (FP).

5. The measurement arrangement as claimed in any of claims 1 to 4,
- wherein the control device (500) is configured to determine the insertion loss of the optical connector (20) by integrating the respective intensity values of the first intensity distribution detected by the camera device (200),
- wherein the control device (500) is configured to determine the mating loss value of the optical connector (20) by respectively integrating the intensity values of the first and the second intensity distribution captured by the camera device (200) over a predefined region emulating a mating connector of the optical connector (20).

6. The measurement arrangement as claimed in any of the claims 1 to 5,
- wherein the control device (500) is configured to control the camera device (200) to capture the first image (I1) in the first plane (NP) at a first location (z1) between the fixture (100) and the camera device (200) by setting a focus of the camera device (200) to the first plane (NP), when the camera device (200) is placed at a first position (Z1),
- wherein the control device (500) is configured to control the camera device (200) to capture the second image (12) in the second plane (FP) at a second location (z2) between the fixture (100) and the camera device (200), the second location (z2) being farther away from the fixture (100) than the first location (z1), by moving the camera device (200) from the first position (Z1) to a second position (Z2) being farther away from the front face of the fixture (100) than the first position (Z1), wherein the focus of the camera device (200) is kept unchanged.

7. The measurement arrangement as claimed in claim 6,
- wherein the control device (500) is configured to determine a respective perimeter of the light beams (L11, L12, L13, L14) coupled out at the end face of the respective optical fiber (11, 12, 13, 14) in the first image (I1) and the second image (I2),
- wherein the control device (500) is configured to determine the expansion of the respective light beam (L11, L12, L13, L14) coupled out at the end face of the respective optical fiber (11, 12, 13, 14) in dependence on the determined respective perimeters of the respective light beam (L11, L12, L13, L14) coupled out at the end face of the respective optical fiber (11, 12, 13, 14) and a distance (D) between the first and second location (z1, z2) of the camera device (200).

8. The measurement arrangement as claimed in any of the claims 1 to 7, comprising:
- a mode conditioner (600) having an input side (I600) to couple light into the mode conditioner and an output side (O600) to couple light out of the mode conditioner,
- a multimode coupler (700) having an input side (I700) to couple light into the multimode coupler and an output side (O700) to couple light out of the multimode coupler and into the optical fibers (11, 12, 13, 14) of the optical cable (10),
- wherein the second light source (400) is arranged to couple light to the input side (I600) of the mode conditioner (600),
- wherein the output side (O600) of the mode conditioner (600) is coupled to the input side (I700) of the multimode coupler (700).

9. A method to determine a quality of an optical cable and an optical connector in an assembled condition, comprising:
- providing a fixture (100) to insert the optical connector (20), wherein the fixture (100) comprises at least a first and a second hole (110, 120) to respectively receive a first and a second pin (21, 22) of the optical connector (20) protruding from a front face (23) of the optical connector (20) and an opening (130) to receive an area (24) of the optical connector (20) comprising end faces of the optical fibers (11, 12, 13, 14),
- inserting the optical connector (20) into the fixture (100),
- illuminating the front face of the fixture (100),
- capturing an image (10) of the front face of the fixture (100),
- evaluating the image (I0) of the front face of the fixture (100) to determine whether the first and the second pin (21, 22) of the optical connector (20) are inserted in the first and second pin hole (110, 120) of the fixture (100) to assert whether the optical connector (20) is inserted in the fixture (100),
- coupling light in the optical cable (10),
- capturing a first image (I1) of the light beams (L11, L12, L13, L14) of the light coupled out of the end faces of the optical fibers (11, 12, 13, 14) in a first plane (NP),
- evaluating the first image (I1) to determine the position of the end faces of the optical fibers (11, 12, 13, 14),
- capturing a second image (I2) of the light beams (L11, L12, L13, L14) of the light coupled out of the end faces of the optical fibers (11, 12, 13, 14) in a second plane (FP), the first plane (NP) being located closer to the front face of the fixture (100) than the second plane (FP),
- determining an angular misplacement for each of the optical fibers (11, 12, 13, 14) within the optical connector (20) and/or an expansion of the respective light beam (L11, L12, L13, L14) coupled out at the end face of the respective optical fiber (11, 12, 13, 14) by evaluating the first and second images (I1, 12),
- determining an insertion loss value of the optical cable (10) by evaluating a first intensity distribution of the light coupled out at the end faces of the optical fibers (11, 12, 13, 14) in the first image (I1),
- determining a mating loss value of the optical connector (20) by evaluating the first intensity distribution of the light coupled out at the end faces of the optical fibers (11, 12, 13, 14) in the first image (I1) and by evaluating a second intensity distribution of the light coupled out at the end faces of the optical fibers (11, 12, 13, 14) in the second image (12).

10. The method as claimed in claim 9, comprising:
determining the position of the first and second pin (21, 22) of the optical connector (20) by evaluating the image (I0) of the front face of the fixture (100).

11. The method as claimed in claims 9 or 10, comprising:
- determining an origin of a reference coordinate system (CS) in relation to the position of the first and second pin (21, 22) of the optical connector (20),
- determining the position of the end faces of the optical fibers (11, 12, 13, 14) in relation to the origin of the reference coordinate system (CS) to evaluate the position of the optical fibers (11, 12, 13, 14) within the optical connector (20) by evaluating the first image (I1) in the first plane (NP).

12. The method as claimed in any of claims 9 to 11, comprising:
- evaluating the first image (I1) to determine a respective center of mass of the respective light beam (L11, L12, L13, L14) of the light coupled out at the respective end face of the respective optical fiber (11, 12, 13, 14) in the first plane (NP),
- evaluating the second image (12) to determine a respective center of mass of the respective light beam (L11, L12, L13, L14) of the light coupled out at the respective end face of the respective optical fiber (11, 12, 13, 14) in the second plane (FP),
- determining the angular misplacement for each of the optical fibers (11, 12, 13, 14) within the optical connector (10) by comparing the respective center of mass of the respective light beam (L11, L12, L13, L14) of the light coupled out of the respective optical fiber (11, 12, 13, 14) in the first plane (NP) with the respective center of mass of the respective light beam (L11, L12, L13, L14) of the light coupled out of the respective optical fiber (11, 12, 13, 14) in the second plane (FP).

13. The method as claimed in any of the claims 9 to 12, comprising:
- determining the insertion loss value of the optical cable (10) by integrating the respective intensity values of the first intensity distribution,
- determining the mating loss value of the optical connector (20) by respectively integrating the respective intensity values of the first and the second intensity distribution over a predefined region emulating a mating connector of the optical connector (20).

14. The method as claimed in any of the claims 9 to 13, comprising:
- providing a camera device (200),
- capturing the first image (I1) in the first plane (NP) at a first location (z1) between the fixture (100) and the camera device (200) by setting a focus of the camera device (200) to the first plane (NP), when the camera device (200) is placed at a first position (Z1),
- capturing the second image (12) in the second plane (FP) at a second location (z2) between the fixture (100) and the camera device (200), the second location (z2) being farther away from the fixture (100) than the first location (z1), by moving the camera device (200) from the first position (Z1) to a second position (Z2) being farther away from the front face of the fixture (100) than the first position (Z1), wherein the focus of the camera device (200) is kept unchanged.

15. The method as claimed in claim 14, comprising:
- determining a respective perimeter of the light beams (L11, L12, L13, L14) coupled out at the end face of the respective optical fiber (11, 12, 13, 14) in the first image (I1) and the second image (I2),
- determining the expansion of the respective light beam (L11, L12, L13, L14) coupled out at the end face of the respective optical fiber (11, 12, 13, 14) in dependence on the determined respective perimeter of the respective light beam (L11, L12, L13, L14) in the first image and the second image and independence on a distance (D) between the first and second location (z1, z2) of the first plane (NP) and the second plane (FP).

## Patentansprüche

1. Messanordnung zur Bestimmung der Qualität eines optischen Kabels und eines optischen Steckverbinders in montiertem Zustand, umfassend:
- eine Halterung (100), die zum Einsetzen des optischen Steckverbinders (20) ausgelegt ist, wobei die Halterung (100) mindestens ein erstes und ein zweites Loch (110, 120) aufweist, um einen ersten bzw. zweiten Stift (21, 22) des optischen Steckverbinders (20) aufzunehmen, die von einer Frontseite (23) des optischen Steckverbinders vorstehen, und eine Öffnung (130), um einen Bereich (24) des optischen Steckverbinders (20) aufzunehmen, der Stirnflächen der optischen Fasern (11, 12, 13, 14) umfasst,
- eine Kameravorrichtung (200),
- eine erste Lichtquelle (300), die dazu ausgelegt ist, die Frontseite der Halterung (100) zu beleuchten,
- eine zweite Lichtquelle (400), die zum Einkoppeln von Licht in das optische Kabel (10) ausgelegt ist,
- eine Steuervorrichtung (500), die dazu ausgelegt ist, einen Messvorgang der Messanordnung (1) zu steuern,
- wobei die Steuervorrichtung (500) dazu ausgelegt ist, die Kameravorrichtung (200) so zu steuern, dass die Kameravorrichtung (200) ein Bild (I0) der Frontseite der Halterung (100) aufnimmt,
- wobei die Steuervorrichtung (500) dazu ausgelegt ist, das Bild (I0) der Frontseite der Halterung (100) auszuwerten, um zu bestimmen, ob der erste und zweite Stift (21, 22) des optischen Steckverbinders (20) in das erste und zweite Stiftloch (110, 120) der Halterung (100) eingesetzt sind, um festzustellen, ob der optische Steckverbinder (20) in die Halterung (100) eingesetzt ist,
- wobei die Steuervorrichtung (500) dazu ausgelegt ist, die Kameravorrichtung (200) so zu steuern, dass die Kameravorrichtung (200) ein erstes Bild (I1) von Lichtstrahlen (L11, L12, L13, L14) des aus den Stirnflächen der optischen Fasern (11, 12, 13, 14) ausgekoppelten Lichts in einer ersten Ebene (NP) und ein zweites Bild (I2) der Lichtstrahlen (L11, L12, L13, L14) des aus den Stirnflächen der optischen Fasern (11, 12, 13, 14) ausgekoppelten Lichts in einer zweiten Ebene (FP) aufnimmt, wobei die erste Ebene (NP) näher an der Frontseite der Halterung (100) liegt als die zweite Ebene (FP),
- wobei die Steuervorrichtung (500) dazu ausgelegt ist, das erste Bild (I1) auszuwerten, um die Position der Stirnflächen der optischen Fasern (11, 12, 13, 14) zu bestimmen,
- wobei die Steuervorrichtung (500) dazu ausgelegt ist, einen Winkelversatz für jede der optischen Fasern (11, 12, 13, 14) innerhalb des optischen Steckverbinders (20) und/oder eine Aufweitung des jeweiligen Lichtstrahls (L11, L12, L13, L14), der an der Stirnfläche der jeweiligen optischen Faser (11, 12, 13, 14) ausgekoppelt wird, durch Auswertung des ersten und zweiten Bildes (I1, I2) zu bestimmen,
- wobei die Steuervorrichtung (500) dazu ausgelegt ist, einen Einfügungsdämpfungswert des optischen Kabels (10) durch Auswerten einer ersten Intensitätsverteilung des an den Stirnflächen der optischen Fasern (11, 12, 13, 14) ausgekoppelten Lichts im ersten Bild (I1) zu bestimmen,
- wobei die Steuervorrichtung (500) dazu ausgelegt ist, einen Kopplungsdämpfungswert des optischen Steckverbinders (20) zu bestimmen, indem die erste Intensitätsverteilung des an den Stirnflächen der optischen Fasern (11, 12, 13, 14) ausgekoppelten Lichts im ersten Bild (I1) ausgewertet wird und eine zweite Intensitätsverteilung des an den Stirnflächen der optischen Fasern (11, 12, 13, 14) ausgekoppelten Lichts im zweiten Bild (I2) ausgewertet wird.

2. Messanordnung nach Anspruch 1,
wobei die Steuervorrichtung (500) dazu ausgelegt ist, die Position des ersten und zweiten Stifts (21, 22) des optischen Steckverbinders (20) durch Auswerten des Bildes (I0) der Frontseite der Halterung (100) zu bestimmen.

3. Messanordnung nach Anspruch 1 oder 2,
- wobei die Steuervorrichtung (500) dazu ausgelegt ist, einen Ursprung eines Referenzkoordinatensystems (CS) in Bezug auf die Position des ersten und zweiten Stifts (21, 22) des optischen Steckverbinders (20) zu bestimmen,
- wobei die Steuervorrichtung (500) dazu ausgelegt ist, die Position der Stirnflächen der optischen Fasern (11, 12, 13, 14) in Bezug auf den Ursprung des Referenzkoordinatensystems (CS) zu bestimmen, um die Position der optischen Fasern (11, 12, 13, 14) innerhalb des optischen Steckverbinders (20) durch Auswerten des ersten Bildes (I1) in der ersten Ebene (NP) zu ermitteln.

4. Messanordnung nach einem der Ansprüche 1 bis 3,
- wobei die Steuervorrichtung (500) dazu ausgelegt ist, das erste Bild (I1) auszuwerten, um einen jeweiligen Massenschwerpunkt des jeweiligen Lichtstrahls (L11, L12, L13, L14) des an der jeweiligen Stirnfläche der jeweiligen optischen Faser (11, 12, 13, 14) ausgekoppelten Lichts in der ersten Ebene (NP) zu bestimmen,
- wobei die Steuervorrichtung (500) dazu ausgelegt ist, das zweite Bild (I2) auszuwerten, um einen jeweiligen Massenschwerpunkt des jeweiligen Lichtstrahls (L11, L12, L13, L14) des an der jeweiligen Stirnfläche der jeweiligen optischen Faser (11, 12, 13, 14) ausgekoppelten Lichts in der zweiten Ebene (FP) zu bestimmen,
- wobei die Steuervorrichtung (500) dazu ausgelegt ist, den Winkelversatz für jede der optischen Fasern (11, 12, 13, 14) innerhalb des optischen Steckverbinders (10) durch Vergleichen des jeweiligen Massenschwerpunktes des jeweiligen Lichtstrahls (L11, L12, L13, L14) des aus der jeweiligen optischen Faser (11, 12, 13, 14) ausgekoppelten Lichts in der ersten Ebene (NP) mit dem jeweiligen Massenschwerpunkt des jeweiligen Lichtstrahls (L11, L12, L13, L14) des aus der jeweiligen optischen Faser (11, 12, 13, 14) ausgekoppelten Lichts in der zweiten Ebene (FP) zu bestimmen.

5. Messanordnung nach einem der Ansprüche 1 bis 4,
- wobei die Steuervorrichtung (500) dazu ausgelegt ist, die Einfügungsdämpfung des optischen Steckverbinders (20) zu bestimmen, indem die jeweiligen Intensitätswerte der von der Kameravorrichtung (200) erfassten ersten Intensitätsverteilung integriert werden,
- wobei die Steuervorrichtung (500) dazu ausgelegt ist, den Kopplungsdämpfungswert des optischen Steckverbinders (20) zu bestimmen, indem jeweils die Intensitätswerte der ersten und zweiten Intensitätsverteilung integriert werden, die von der Kameravorrichtung (200) über einen vordefinierten Bereich aufgenommen werden, wodurch ein zum optischen Steckverbinder (20) passendes Verbindungsstück emuliert wird.

6. Messanordnung nach einem der Ansprüche 1 bis 5,
- wobei die Steuervorrichtung (500) dazu ausgelegt ist, die Kameravorrichtung (200) zu steuern, um das erste Bild (I1) in der ersten Ebene (NP) an einer ersten Stelle (z1) zwischen der Halterung (100) und der Kameravorrichtung (200) aufzunehmen, indem eine Brennweite der Kameravorrichtung (200) auf die erste Ebene (NP) eingestellt wird, wenn die Kameravorrichtung (200) an einer ersten Position (Z1) platziert ist,
- wobei die Steuervorrichtung (500) dazu ausgelegt ist, die Kameravorrichtung (200) zu steuern, um das zweite Bild (I2) in der zweiten Ebene (FP) an einer zweiten Stelle (z2) zwischen der Halterung (100) und der Kameravorrichtung (200) aufzunehmen, wobei die zweite Stelle (z2) weiter von der Halterung (100) entfernt ist als die erste Stelle (z1), und zwar durch Bewegen der Kameravorrichtung (200) von der ersten Position (Z1) zu einer zweiten Position (Z2), die weiter von der Frontseite der Halterung (100) entfernt ist als die erste Position (Z1), wobei die Brennweite der Kameravorrichtung (200) unverändert bleibt.

7. Messanordnung nach Anspruch 6,
- wobei die Steuervorrichtung (500) dazu ausgelegt ist, in dem ersten Bild (I1) und zweiten Bild (I2) einen jeweiligen Umfang der Lichtstrahlen (L11, L12, L13, L14) zu bestimmen, die an der Stirnfläche der jeweiligen optischen Faser (11, 12, 13, 14) ausgekoppelt werden,
- wobei die Steuervorrichtung (500) dazu ausgelegt ist, die Aufweitung des jeweiligen Lichtstrahls (L11, L12, L13, L14), der an der Stirnfläche der jeweiligen optischen Faser (11, 12, 13, 14) ausgekoppelt wird, in Abhängigkeit von den bestimmten jeweiligen Umfängen des jeweiligen Lichtstrahls (L11, L12, L13, L14), der an der Stirnfläche der jeweiligen optischen Faser (11, 12, 13, 14) ausgekoppelt wird, und von einem Abstand (D) zwischen der ersten und zweiten Stelle (z1, z2) der Kameravorrichtung (200) zu bestimmen.

8. Messanordnung nach einem der Ansprüche 1 bis 7, aufweisend:
- einen Schwingungsmode-Konditionierer (600) mit einer Eingangsseite (I600) zum Einkoppeln von Licht in den Schwingungsmode-Konditionierer und einer Ausgangsseite (0600) zum Auskoppeln von Licht aus dem Schwingungsmode-Konditionierer,
- einen Multimode-Koppler (700) mit einer Eingangsseite (I700) zum Einkoppeln von Licht in den Multimode-Koppler und einer Ausgangsseite (0700) zum Auskoppeln von Licht aus dem Multimode-Koppler und Einkoppeln in die optischen Fasern (11, 12, 13, 14) des optischen Kabels (10),
- wobei die zweite Lichtquelle (400) eingerichtet ist, um Licht in die Eingangsseite (I600) des Schwingungsmode-Konditionierers (600) einzukoppeln,
- wobei die Ausgangsseite (0600) des Schwingungsmode-Konditionierers (600) an die Eingangsseite (I700) des Multimode-Kopplers (700) angeschlossen ist.

9. Verfahren zur Bestimmung der Qualität eines optischen Kabels und eines optischen Steckverbinders in einem montierten Zustand, umfassend:
- Bereitstellen einer Halterung (100) zum Einsetzen des optischen Steckverbinders (20), wobei die Halterung (100) mindestens ein erstes und ein zweites Loch (110, 120) aufweist, um einen ersten bzw. zweiten Stift (21, 22) des optischen Steckverbinders (20) aufzunehmen, die von einer Frontseite (23) des optischen Steckverbinders (20) vorstehen, und eine Öffnung (130), um einen Bereich (24) des optischen Steckverbinders (20) aufzunehmen, der Stirnflächen der optischen Fasern (11, 12, 13, 14) umfasst,
- Einsetzen des optischen Steckverbinders (20) in die Halterung (100),
- Beleuchten der Frontseite der Halterung (100),
- Aufnehmen eines Bildes (I0) der Frontseite der Halterung (100),
- Auswerten des Bildes (I0) der Frontseite der Halterung (100), um zu bestimmen, ob der erste und zweite Stift (21, 22) des optischen Steckverbinders (20) in das erste bzw. zweite Stiftloch (110, 120) der Halterung (100) eingesetzt sind, um festzustellen, ob der optische Steckverbinder (20) in die Halterung (100) eingesetzt ist,
- Einkoppeln von Licht in das optische Kabel (10),
- Aufnehmen eines ersten Bildes (I1) der Lichtstrahlen (L11, L12, L13, L14) des aus den Stirnflächen der optischen Fasern (11, 12, 13, 14) ausgekoppelten Lichts in einer ersten Ebene (NP),
- Auswerten des ersten Bildes (I1) zur Bestimmung der Position der Stirnflächen der optischen Fasern (11, 12, 13, 14),
- Aufnehmen eines zweiten Bildes (I2) der Lichtstrahlen (L11, L12, L13, L14) des aus den Stirnflächen der optischen Fasern (11, 12, 13, 14) ausgekoppelten Lichts in einer zweiten Ebene (FP), wobei die erste Ebene (NP) näher an der Frontseite der Halterung (100) liegt als die zweite Ebene (FP),
- Bestimmen eines Winkelversatzes für jede der optischen Fasern (11, 12, 13, 14) innerhalb des optischen Steckverbinders (20) und/oder einer Aufweitung des jeweiligen an der Stirnfläche der jeweiligen optischen Faser (11, 12, 13, 14) ausgekoppelten Lichtstrahls (L11, L12, L13, L14) durch Auswerten des ersten und zweiten Bildes (I1, I2),
- Bestimmen eines Einfügungsdämpfungswertes des optischen Kabels (10) durch Auswerten einer ersten Intensitätsverteilung des an den Stirnflächen der optischen Fasern (11, 12, 13, 14) ausgekoppelten Lichts im ersten Bild (I1),
- Bestimmen eines Kopplungsdämpfungswertes des optischen Steckverbinders (20) durch Auswerten der ersten Intensitätsverteilung des an den Stirnflächen der optischen Fasern (11, 12, 13, 14) ausgekoppelten Lichts im ersten Bild (I1) und durch Auswerten einer zweiten Intensitätsverteilung des an den Stirnflächen der optischen Fasern (11, 12, 13, 14) ausgekoppelten Lichts im zweiten Bild (I2).

10. Verfahren nach Anspruch 9, umfassend:
Bestimmen der Position des ersten und zweiten Stifts (21, 22) des optischen Steckverbinders (20) durch Auswerten des Bildes (I0) der Frontseite der Halterung (100).

11. Verfahren nach Anspruch 9 oder 10, umfassend:
- Bestimmen eines Ursprungs eines Referenzkoordinatensystems (CS) in Bezug auf die Position des ersten und zweiten Stifts (21, 22) des optischen Steckverbinders (20),
- Bestimmen der Position der Stirnflächen der optischen Fasern (11, 12, 13, 14) in Bezug auf den Ursprung des Referenzkoordinatensystems (CS), um die Position der optischen Fasern (11, 12, 13, 14) innerhalb des optischen Steckverbinders (20) durch Auswertung des ersten Bildes (I1) in der ersten Ebene (NP) zu bestimmen.

12. Verfahren nach einem der Ansprüche 9 bis 11, umfassend:
- Auswerten des ersten Bildes (I1), um einen jeweiligen Massenschwerpunkt des jeweiligen Lichtstrahls (L11, L12, L13, L14) des an der jeweiligen Stirnfläche der jeweiligen optischen Faser (11, 12, 13, 14) ausgekoppelten Lichts in der ersten Ebene (NP) zu bestimmen,
- Auswerten des zweiten Bildes (I2), um einen jeweiligen Massenschwerpunkt des jeweiligen Lichtstrahls (L11, L12, L13, L14) des an der jeweiligen Stirnfläche der jeweiligen optischen Faser (11, 12, 13, 14) ausgekoppelten Lichts in der zweiten Ebene (FP) zu bestimmen,
- Bestimmen des Winkelversatzes für jede der optischen Fasern (11, 12, 13, 14) innerhalb des optischen Steckverbinders (10) durch Vergleichen des jeweiligen Massenschwerpunkts des jeweiligen Lichtstrahls (L11, L12, L13, L14) des aus der jeweiligen optischen Faser (11, 12, 13, 14) ausgekoppelten Lichts in der ersten Ebene (NP) mit dem jeweiligen Massenschwerpunkt des jeweiligen Lichtstrahls (L11, L12, L13, L14) des aus der jeweiligen optischen Faser (11, 12, 13, 14) ausgekoppelten Lichts in der zweiten Ebene (FP) .

13. Verfahren nach einem der Ansprüche 9 bis 12, umfassend:
- Bestimmen des Einfügungsdämpfungswertes des optischen Kabels (10) durch Integration der jeweiligen Intensitätswerte der ersten Intensitätsverteilung,
- Bestimmen des Kopplungsdämpfungswertes des optischen Steckverbinders (20) durch jeweiliges Integrieren der jeweiligen Intensitätswerte der ersten und zweiten Intensitätsverteilung über einen vordefinierten Bereich, wodurch ein zum optischen Steckverbinder (20) passendes Verbindungsstück emuliert wird.

14. Verfahren nach einem der Ansprüche 9 bis 13, umfassend:
- Bereitstellen einer Kameravorrichtung (200),
- Aufnehmen des ersten Bildes (I1) in der ersten Ebene (NP) an einer ersten Stelle (z1) zwischen der Halterung (100) und der Kameravorrichtung (200) durch Einstellen einer Brennweite der Kameravorrichtung (200) auf die erste Ebene (NP), wenn die Kameravorrichtung (200) an einer ersten Position (Z1) platziert ist,
- Aufnehmen des zweiten Bildes (I2) in der zweiten Ebene (FP) an einer zweiten Stelle (z2) zwischen der Halterung (100) und der Kameravorrichtung (200), wobei die zweite Stelle (z2) weiter von der Halterung (100) entfernt ist als die erste Stelle (z1), und zwar durch Bewegen der Kameravorrichtung (200) von der ersten Position (Z1) zu einer zweiten Position (Z2), die weiter von der Frontseite der Halterung (100) entfernt ist als die erste Position (Z1), wobei die Brennweite der Kameravorrichtung (200) unverändert bleibt.

15. Verfahren nach Anspruch 14, umfassend:
- Bestimmen eines jeweiligen Umfangs der an der Stirnfläche der jeweiligen optischen Faser (11, 12, 13, 14) ausgekoppelten Lichtstrahlen (L11, L12, L13, L14) im ersten Bild (I1) und im zweiten Bild (I2),
- Bestimmen der Aufweitung des an der Stirnfläche der jeweiligen optischen Faser (11, 12, 13, 14) ausgekoppelten jeweiligen Lichtstrahls (L11, L12, L13, L14) in Abhängigkeit vom jeweiligen im ersten Bild und zweiten Bild bestimmten Umfang des jeweiligen Lichtstrahls (L11, L12, L13, L14) und in Abhängigkeit von einem Abstand (D) zwischen der ersten und zweiten Stelle (z1, z2) der ersten Ebene (NP) und zweiten Ebene (FP).

## Revendications

1. Agencement de mesure pour déterminer une qualité d'un câble optique et d'un connecteur optique dans un état assemblé, comprenant :
- une fixation (100) configurée pour insérer le connecteur optique (20), sachant que la fixation (100) comprend au moins un premier et un deuxième trou (110, 120) pour recevoir respectivement une première et une deuxième broche (21, 22) du connecteur optique (20) dépassant d'une face avant (23) du connecteur optique et une ouverture (130) pour recevoir un secteur (24) du connecteur optique (20) comprenant des faces frontales des fibres optiques (11, 12, 13, 14),
- un dispositif de caméra (200),
- une première source de lumière (300) configurée pour éclairer la face avant de la fixation (100),
- une deuxième source de lumière (400) configurée pour coupler de la lumière dans le câble optique (10),
- un dispositif de commande (500) configuré pour commander une procédure de mesure de l'agencement de mesure (1),
- sachant que le dispositif de commande (500) est configuré pour commander le dispositif de caméra (200) de telle sorte que le dispositif de caméra (200) capture une image (I0) de la face avant de la fixation (100),
- sachant que le dispositif de commande (500) est configuré pour évaluer l'image (I0) de la face avant de la fixation (100) pour déterminer si la première et la deuxième broche (21, 22) du connecteur optique (20) sont insérées dans le premier et le deuxième trou de broche (110, 120) de la fixation (100) pour affirmer si le connecteur optique (20) est inséré dans la fixation (100),
- sachant que le dispositif de commande (500) est configuré pour commander le dispositif de caméra (200) de telle sorte que le dispositif de caméra (200) capture une première image (I1) de faisceaux lumineux (L11, L12, L13, L14) de la lumière découplée des faces frontales des fibres optiques (11, 12, 13, 14) dans un premier plan (NP) et une deuxième image (I2) des faisceaux lumineux (L11, L12, L13, L14) de la lumière découplée des faces frontales des fibres optiques (11, 12, 13, 14) dans un deuxième plan (FP), le premier plan (NP) étant situé plus près de la face avant de la fixation (100) que le deuxième plan (FP),
- sachant que le dispositif de commande (500) est configuré pour évaluer la première image (I1) pour déterminer la position des faces frontales des fibres optiques (11, 12, 13, 14),
- sachant que le dispositif de commande (500) est configuré pour déterminer un déport angulaire pour chacune des fibres optiques (11, 12, 13, 14) au sein du connecteur optique (20) et/ou une dilatation du faisceau lumineux (L11, L12, L13, L14) respectif découplé au niveau de la face frontale de la fibre optique (11, 12, 13, 14) respective en évaluant la première et la deuxième image (I1, I2),
- sachant que le dispositif de commande (500) est configuré pour déterminer une valeur de perte d'insertion du câble optique (10) en évaluant une première distribution d'intensité de la lumière découplée au niveau des faces frontales des fibres optiques (11, 12, 13, 14) dans la première image (I1),
- sachant que le dispositif de commande (500) est configuré pour déterminer une valeur de perte de correspondance du connecteur optique (20) en évaluant la première distribution d'intensité de la lumière découplée au niveau des faces frontales des fibres optiques (11, 12, 13, 14) dans la première image (I1) et en évaluant une deuxième distribution d'intensité de la lumière découplée au niveau des faces frontales des fibres optiques (11, 12, 13, 14) dans la deuxième image (I2).

2. L'agencement de mesure tel que revendiqué dans la revendication 1,
sachant que le dispositif de commande (500) est configuré pour déterminer la position de la première et de la deuxième broche (21, 22) du connecteur optique (20) en évaluant l'image (10) de la face avant de la fixation (100).

3. L'agencement de mesure tel que revendiqué dans les revendications 1 ou 2,
- sachant que le dispositif de commande (500) est configuré pour déterminer une origine d'un système de coordonnées de référence (CS) en relation avec la position de la première et de la deuxième broche (21, 22) du connecteur optique (20),
- sachant que le dispositif de commande (500) est configuré pour déterminer la position des faces frontales des fibres optiques (11, 12, 13, 14) en relation avec l'origine du système de coordonnées de référence (CS) pour évaluer la position des fibres optiques (11, 12, 13, 14) au sein du connecteur optique (20) en évaluant la première image (I1) dans le premier plan (NP).

4. L'agencement de mesure tel que revendiqué dans l'une quelconque des revendications 1 à 3,
- sachant que le dispositif de commande (500) est configuré pour évaluer la première image (I1) pour déterminer un centre de gravité respectif du faisceau lumineux (L11, L12, L13, L14) respectif de la lumière découplée au niveau de la face frontale respective de la fibre optique (11, 12, 13, 14) respective dans le premier plan (NP),
- sachant que le dispositif de commande (500) est configuré pour évaluer la deuxième image (I2) pour déterminer un centre de gravité respectif du faisceau lumineux (L11, L12, L13, L14) respectif de la lumière découplée au niveau de la face frontale respective de la fibre optique (11, 12, 13, 14) respective dans le deuxième plan (FP),
- sachant que le dispositif de commande (500) est configuré pour déterminer le déport angulaire pour chacune des fibres optiques (11, 12, 13, 14) au sein du connecteur optique (10) en comparant le centre de gravité respectif du faisceau lumineux (L11, L12, L13, L14) respectif de la lumière découplée de la fibre optique (11, 12, 13, 14) respective dans le premier plan (NP) avec le centre de gravité respectif du faisceau lumineux (L11, L12, L13, L14) respectif de la lumière découplée de la fibre optique (11, 12, 13, 14) respective dans le deuxième plan (FP).

5. L'agencement de mesure tel que revendiqué dans l'une quelconque des revendications 1 à 4,
- sachant que le dispositif de commande (500) est configuré pour déterminer la perte d'insertion du connecteur optique (20) en intégrant les valeurs d'intensité respectives de la première distribution d'intensité détectée par le dispositif de caméra (200),
- sachant que le dispositif de commande (500) est configuré pour déterminer la valeur de perte de correspondance du connecteur optique (20) en intégrant respectivement les valeurs d'intensité de la première et de la deuxième distribution d'intensité capturées par le dispositif de caméra (200) sur une région prédéfinie émulant un connecteur correspondant du connecteur optique (20).

6. L'agencement de mesure tel que revendiqué dans l'une quelconque des revendications 1 à 5,
- sachant que le dispositif de commande (500) est configuré pour commander le dispositif de caméra (200) pour capturer la première image (I1) dans le premier plan (NP) à un premier emplacement (z1) entre la fixation (100) et le dispositif de caméra (200) en réglant un foyer du dispositif de caméra (200) sur le premier plan (NP), lorsque le dispositif de caméra (200) est placé dans une première position (Z1),
- sachant que le dispositif de commande (500) est configuré pour commander le dispositif de caméra (200) pour capturer la deuxième image (I2) dans le deuxième plan (FP) à un deuxième emplacement (z2) entre la fixation (100) et le dispositif de caméra (200), le deuxième emplacement (z2) étant plus éloigné de la fixation (100) que le premier emplacement (z1), en déplaçant le dispositif de caméra (200) de la première position (Z1) à une deuxième position (Z2) qui est plus éloignée de la face avant de la fixation (100) que la première position (Z1), sachant que le foyer du dispositif de caméra (200) est maintenu inchangé.

7. L'agencement de mesure tel que revendiqué dans la revendication 6,
- sachant que le dispositif de commande (500) est configuré pour déterminer un périmètre respectif des faisceaux lumineux (L11, L12, L13, L14) découplés au niveau de la face frontale de la fibre optique (11, 12, 13, 14) respective dans la première image (I1) et la deuxième image (I2),
- sachant que le dispositif de commande (500) est configuré pour déterminer la dilatation du faisceau lumineux (L11, L12, L13, L14) respectif découplé au niveau de la face frontale de la fibre optique (11, 12, 13, 14) respective en fonction des périmètres respectifs déterminés du faisceau lumineux (L11, L12, L13, L14) respectif découplé au niveau de la face frontale de la fibre optique (11, 12, 13, 14) respective et d'une distance (D) entre le premier et le deuxième emplacement (z1, z2) du dispositif de caméra (200).

8. L'agencement de mesure tel que revendiqué dans l'une quelconque des revendications 1 à 7, comprenant :
- un conditionneur de mode (600) présentant un côté entrée (I600) pour coupler de la lumière dans le conditionneur de mode et un côté sortie (O600) pour découpler de la lumière du conditionneur de mode,
- un coupleur multimode (700) présentant un côté entrée (I700) pour coupler de la lumière dans le coupleur multimode et un côté sortie (O700) pour découpler de la lumière du coupleur multimode et coupler de la lumière dans les fibres optiques (11, 12, 13, 14) du câble optique (10),
- sachant que la deuxième source de lumière (400) est agencée pour coupler de la lumière au côté entrée (I600) du conditionneur de mode (600),
- sachant que le côté sortie (O600) du conditionneur de mode (600) est couplé au côté entrée (I700) du coupleur multimode (700).

9. Procédé pour déterminer une qualité d'un câble optique et d'un connecteur optique dans un état assemblé, comprenant :
- la fourniture d'une fixation (100) pour insérer le connecteur optique (20), sachant que la fixation (100) comprend au moins un premier et un deuxième trou (110, 120) pour recevoir respectivement une première et une deuxième broche (21, 22) du connecteur optique (20) dépassant d'une face avant (23) du connecteur optique (20) et une ouverture (130) pour recevoir un secteur (24) du connecteur optique (20) comprenant des faces frontales des fibres optiques (11, 12, 13, 14),
- l'insertion du connecteur optique (20) dans la fixation (100),
- l'éclairage de la face avant de la fixation (100),
- la capture d'une image (I0) de la face avant de la fixation (100),
- l'évaluation de l'image (I0) de la face avant de la fixation (100) pour déterminer si la première et la deuxième broche (21, 22) du connecteur optique (20) sont insérées dans le premier et le deuxième trou de broche (110, 120) de la fixation (100) pour affirmer si le connecteur optique (20) est inséré dans la fixation (100),
- le couplage de lumière dans le câble optique (10),
- la capture d'une première image (I1) des faisceaux lumineux (L11, L12, L13, L14) de la lumière découplée des faces frontales des fibres optiques (11, 12, 13, 14) dans un premier plan (NP),
- l'évaluation de la première image (I1) pour déterminer la position des faces frontales des fibres optiques (11, 12, 13, 14),
- la capture d'une deuxième image (I2) des faisceaux lumineux (L11, L12, L13, L14) de la lumière découplée des faces frontales des fibres optiques (11, 12, 13, 14) dans un deuxième plan (FP), le premier plan (NP) étant situé plus près de la face avant de la fixation (100) que le deuxième plan (FP),
- la détermination d'un déport angulaire de chacune des fibres optiques (11, 12, 13, 14) au sein du connecteur optique (20) et/ou d'une dilatation du faisceau lumineux (L11, L12, L13, L14) respectif découplé au niveau de la face frontale de la fibre optique (11, 12, 13, 14) respective en évaluant la première et la deuxième image (I1, I2),
- la détermination d'une valeur de perte d'insertion du câble optique (10) en évaluant une première distribution d'intensité de la lumière découplée au niveau des faces frontales des fibres optiques (11, 12, 13, 14) dans la première image (I1),
- la détermination d'une valeur de perte de correspondance du connecteur optique (20) en évaluant la première distribution d'intensité de la lumière découplée au niveau des faces frontales des fibres optiques (11, 12, 13, 14) dans la première image (I1) et en évaluant une deuxième distribution d'intensité de la lumière découplée au niveau des faces frontales des fibres optiques (11, 12, 13, 14) dans la deuxième image (I2).

10. Le procédé tel que revendiqué dans la revendication 9, comprenant :
la détermination de la position de la première et de la deuxième broche (21, 22) du connecteur optique (20) en évaluant l'image (10) de la face avant de la fixation (100).

11. Le procédé tel que revendiqué dans les revendications 9 ou 10, comprenant :
- la détermination d'une origine d'un système de coordonnées de référence (CS) en relation avec la position de la première et de la deuxième broche (21, 22) du connecteur optique (20),
- la détermination de la position des faces frontales des fibres optiques (11, 12, 13, 14) en relation avec l'origine du système de coordonnées de référence (CS) pour évaluer la position des fibres optiques (11, 12, 13, 14) au sein du connecteur optique (20) en évaluant la première image (I1) dans le premier plan (NP).

12. Le procédé tel que revendiqué dans l'une quelconque des revendications 9 à 11, comprenant :
- l'évaluation de la première image (I1) pour déterminer un centre de gravité respectif du faisceau lumineux (L11, L12, L13, L14) respectif de la lumière découplée au niveau de la face frontale respective de la fibre optique (11, 12, 13, 14) respective dans le premier plan (NP),
- l'évaluation de la deuxième image (I2) pour déterminer un centre de gravité respectif du faisceau lumineux (L11, L12, L13, L14) respectif de la lumière découplée au niveau de la face frontale respective de la fibre optique (11, 12, 13, 14) respective dans le deuxième plan (FP),
- la détermination du déport angulaire pour chacune des fibres optiques (11, 12, 13, 14) au sein du connecteur optique (10) en comparant le centre de gravité respectif du faisceau lumineux (L11, L12, L13, L14) respectif de la lumière découplée de la fibre optique (11, 12, 13, 14) respective dans le premier plan (NP) avec le centre de gravité respectif du faisceau lumineux (L11, L12, L13, L14) respectif de la lumière découplée de la fibre optique (11, 12, 13, 14) respective dans le deuxième plan (FP).

13. Le procédé tel que revendiqué dans l'une quelconque des revendications 9 à 12, comprenant :
- la détermination de la valeur de perte d'insertion du câble optique (10) en intégrant les valeurs d'intensité respectives de la première distribution d'intensité,
- la détermination de la valeur de perte de correspondance du connecteur optique (20) en intégrant respectivement les valeurs d'intensité respectives de la première et de la deuxième distribution d'intensité sur une région prédéfinie émulant un connecteur correspondant du connecteur optique (20).

14. Le procédé tel que revendiqué dans l'une quelconque des revendications 9 à 13, comprenant :
- la fourniture d'un dispositif de caméra (200),
- la capture de la première image (I1) dans le premier plan (NP) à un premier emplacement (z1) entre la fixation (100) et le dispositif de caméra (200) en réglant un foyer du dispositif de caméra (200) sur le premier plan (NP), lorsque le dispositif de caméra (200) est placé dans une première position (Z1),
- la capture de la deuxième image (I2) dans le deuxième plan (FP) à un deuxième emplacement (z2) entre la fixation (100) et le dispositif de caméra (200), le deuxième emplacement (z2) étant plus éloigné de la fixation (100) que le premier emplacement (z1), en déplaçant le dispositif de caméra (200) de la première position (Z1) à une deuxième position (Z2) qui est plus éloignée de la face avant de la fixation (100) que la première position (Z1), sachant que le foyer du dispositif de caméra (200) est maintenu inchangé.

15. Le procédé tel que revendiqué dans la revendication 14, comprenant :
- la détermination d'un périmètre respectif des faisceaux lumineux (L11, L12, L13, L14) découplés au niveau de la face frontale de la fibre optique (11, 12, 13, 14) respective dans la première image (I1) et la deuxième image (I2),
- la détermination de la dilatation du faisceau lumineux (L11, L12, L13, L14) respectif découplé au niveau de la face frontale de la fibre optique (11, 12, 13, 14) respective en fonction du périmètre respectif déterminé du faisceau lumineux (L11, L12, L13, L14) respectif dans la première image et la deuxième image et en fonction d'une distance (D) entre le premier et le deuxième emplacement (z1, z2) du premier plan (NP) et du deuxième plan (FP).
